# EUROPEAN PATENT SPECIFICATION

(11) **EP 2 304 322 B1**
(45) Date of publication and mention of the grant of the patent: **17.05.2017**
(21) Application number: 09732997.3
(22) Date of filing: 16.04.2009
(51) Int. Cl.: F24C 15/16, F24C 15/02, F24C 15/12

(54) **OVEN**
OFEN
FOUR DE CUISSON

(30) Priority: 17.04.2008 AU 2008901884
(43) Date of publication of application: 06.04.2011
(73) Proprietor: Breville PTY Limited, Alexandria, NSW 2015 (AU)
(72) Inventor: HENSEL, Keith, James, Lane Cove New South Wales 2066 (AU)
(74) Representative: Williams, Ceili
(86) International application number: PCT/AU2009/000465
(87) International publication number: WO 2009/127001

(56) References cited:
- EP-A1- 1 776 914
- EP-A2- 1 835 232
- JP-A- S59 200 135
- US-A- 3 830 220
- US-A- 4 087 140
- US-B2- 7 173 217
- PATENT ABSTRACTS OF JAPAN & JP 59 200135 A (MATSUSHITA ELECTRIC IND CO LTD) 13 November 1984

## Description

### Field of the Invention

The present technology relates to ovens such as convection ovens, toaster ovens and microwave ovens.

### Background of the Invention

Benchtop or countertop ovens can be used to conveniently warm food such as muffins, pizzas, or bagels. They may be used to cook meals. After the heating or cooking process is finished, a user may pull out a rack from inside the oven, so as to access the food item, or allow the food item to cool. It is possible for a user to be burned while doing so. The term oven is intended to broadly denote all types of ovens. In this specification examples are provided with reference to an infrared oven.

A benchtop or countertop takes up counter space. In a kitchen with limited counter space, the loss of space creates an inconvenience for the user. In this specification reference is made to cutting boards, serving trays and trays, it being understood that a suitable flat surface can be used for all or some of these purposes.

Document JP S59 200135 describes a a cooking oven wherein a cooking tray is moved with the opening or closing of a door. A permanent magnet is mounted on the base of the tray and cooperates with a magnet which slides in a guide. Document EP 1 776 914 describes a cabinet with a door, the door comprising magnetic means which can be placed in an operative position to pull a tray when the door opening movement starts.

Document US 4 087 140 describes a cabinet having a door with a magnet located at the rear surface of the door. The magnet interacts with a receptacle inside the cabinet.

### Objects and Summary of the Invention

It is an object of the present invention to facilitate the partial removal of a rack from an oven such as toaster oven.

It is a further object of the present invention to address the loss of counter space occupied by a benchtop or countertop oven.

Accordingly, there is provided an oven having an oven body that defines a cavity, the cavity having a support structure for supporting a rack. At least a front portion of the rack is paramagnetic. The cavity is closed by a door that is hinged to a lower front portion of the oven body. The door further has lateral frame elements, and at least one frame element comprises a magnet. The magnet is adapted to engage and attract the front portion of the rack.

There is further provided, in combination with an oven, a tray or cutting board with location feet that correspond with and cooperate or interlock with the pattern of the top surface. The tray resists overheating.

There is also provided, in combination, a benchtop oven and cutting board comprising a benchtop oven having a front opening door and a metal upper surface. The upper surface has features that cooperate with the cutting board and the cutting board has heat resistant feet that interlock with the features.

In some embodiments the cutting board is a bamboo composite.

In other embodiments the metal upper surface of the oven has a pattern of ribs within a recessed area that serve as a locating feature for the cutting board.

Also provided is an oven with an internal heating cavity and a front opening door that is horizontally hinged to a lower front portion of the oven body, the cavity has opposing support structures for supporting one or more metal racks. The door incorporates a magnet that is used to pull a rack out of the oven.

In preferred embodiments, the magnet is located such that a rack in the cavity is under the influence of the magnet when the door is closed.

### Brief Description of the Drawing Figures

In order that the invention be better understood, reference is now made to the following drawing figures in which:
- Figure 1: is a perspective view of a toaster oven in accordance with the present technology;
- Figure 2: is a cross section view of the toaster oven depicted in Figure 1;
- Figure 3: is a cross section view of the toaster oven depicted in Figure 1, where the door is partially open;
- Figure 4: is a cross section view of the toaster oven depicted in Figure 1, where the door is partially open;
- Figure 5: is a cross section view of the toaster oven depicted in Figure 1, where the door is partially open;
- Figure 6: is a cross section view of the toaster oven depicted in Figure 1, wherein the door is fully open;
- Figure 7: is a side elevation detail view of the tray or cutting board and oven door shown in Figure 6;
- Figure 8: is a perspective view of an oven and cooperating tray;
- Figure 9: is an inverted perspective view of the tray depicted in Figure 8;
- Figure 10: is a side elevation of the oven and tray;
- Figure 11: is a cross sectional view of the oven and tray depicted in Figure 10;
- Figure 12: is an inverted perspective view of a cutting board and foot;
- Figure 13: is a side elevation illustrating the oven cooperating oven board;
- Figure 14: is a cross sectional view of the oven and cutting board depicted in Figure 13;
- Figure 15: is a partial perspective view of an oven and cutting board;
- Figure 16: is a perspective view of an oven with cooperating or interlocking bamboo tray;
- Figure 17: is a cross section of the tray and foot; and
- Figure 18: is a cross sectional view of the tray's foot.

### Best Mode and Other Embodiments

The following disclosure pertains, to features that are useful in conjunction with many oven styles and particularly, a benchtop or countertop oven. It will be appreciated that the features of the magnetic rack extraction with vertically hinged door are not limited to any particular oven type. Similarly the space saving tray or cutting board is intended for use in conjunction with any large benchtop or countertop appliance such as a microwave, convection or toaster oven, but it is particularly useful where space saving is required or where other types of trays or boards might overheat to unacceptable levels.

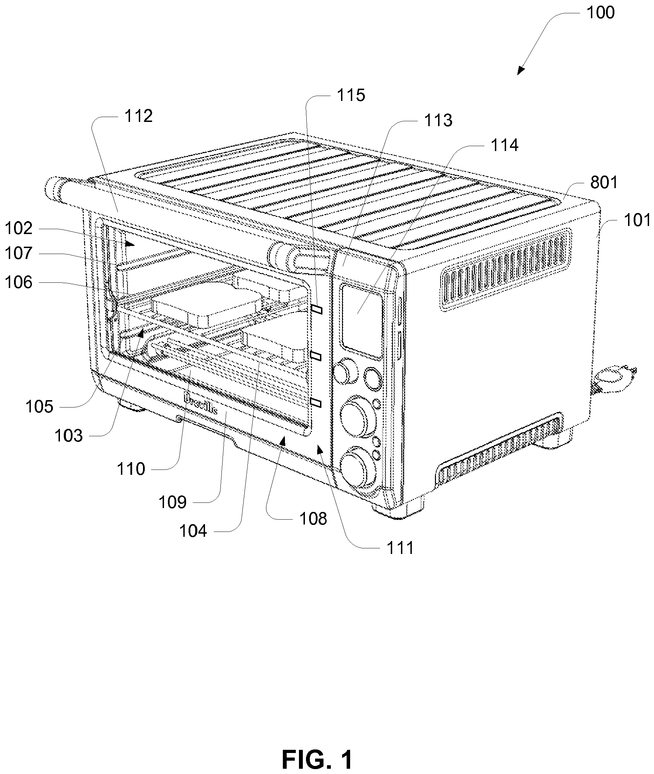

Referring to Figure 1, a benchtop or countertop oven, such as a toaster oven 100 comprises an oven body 101 having an internal heating cavity 102. The interior walls of the cavity 102 have opposing support structures 103 for supporting any number (one or more) of metal racks 104. As shown, the support structures 103 comprise grooves that are formed into the interior walls, the grooves defining three rack positions 105, 106, 107 that are roughly 40mm apart. As will be explained, the middle position is preferably a "rack pull-out" position. In this position, an opening of the oven door automatically causes the rack 104 to be pulled out. Other support structures, for example knobs or stubs that support the racks, may be used. In some embodiments, the support structure may define a different number of tray positions.

To help a user identify the correct rack position for a particular food labels 115 are affixed to or printed on the door 108. The labels 115 suggest suitable food items or cooking methods for each rack position. The locations of the labels correspond to the rack positions.

A front opening door 108 is horizontally hinged to a lower front portion of the oven body. As shown, the door 108 comprises a frame 109 that surrounds a glass window 110. The door 108 further carries a horizontal handle 112.

In this embodiment, the toaster oven 100 further comprises a control panel 113. The control panel 113 is shown to be located along the front surface 111 of the toaster oven, and adjacent to the front opening door 108. As shown, the control panel 113 comprises a display 114 and an array of user operable controls.

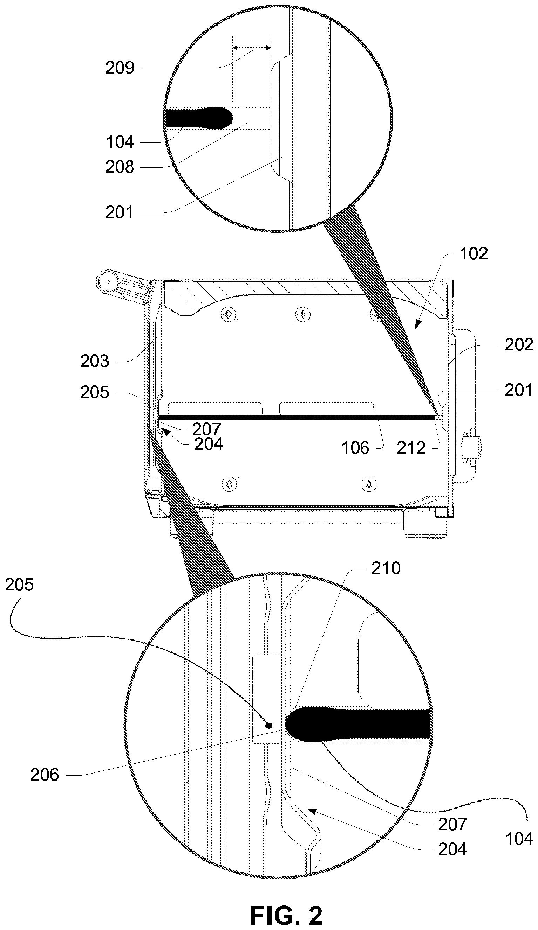

Referring to Figure 2, a rear bumper 201 is provided along the rear surface 202 of the cavity 102. The rear bumper 201 is located such that it corresponds to the "rack pull-out" position 106. The bumper serves to urge the middle rack forward relative to the other racks. This is done so that the forward edge 210 of the rack is advanced forward and toward the door more than in the other positions. In this way the forward edge 210 can enter the recesses 204 forward in each lateral edge of the door. The recesses 204 are provided to space the magnets 205 away from the inner surface of the door, as will be explained.

A magnet 205 is provided in a cavity behind at least one recess 204 located on an inner surface of the door. The one or more recessed magnets are used to pull the middle rack out of the oven. A rear edge 206 of the magnet 205 is located parallel or flush with a floor 207 of the recess 204. The recess 204 and magnet 205 are located such that they are adjacent to the position 106. The magnet 205 is located such that a rack 104 placed into the middle position 106 is under the influence of the magnet 205 at least when the door is closed.

The rack 104 is sized such that a clearance 208 is left between the rear edge 211 of the rack 104 and the rear bumper 201. In this example, the clearance 208 is about 2mm.

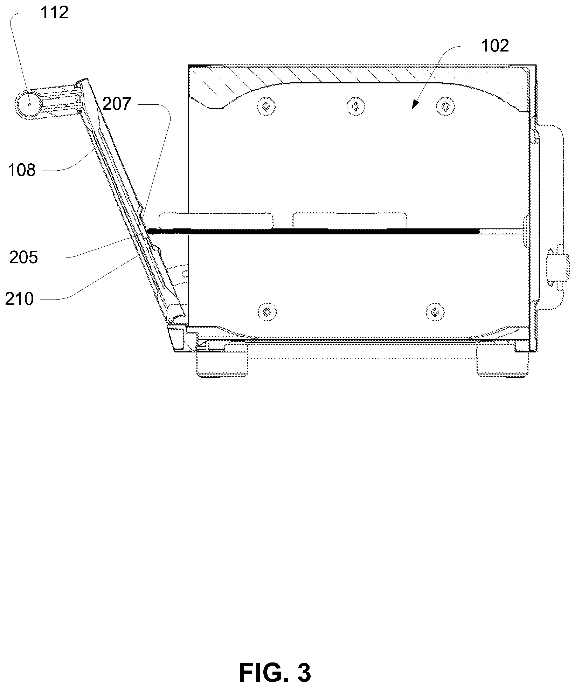

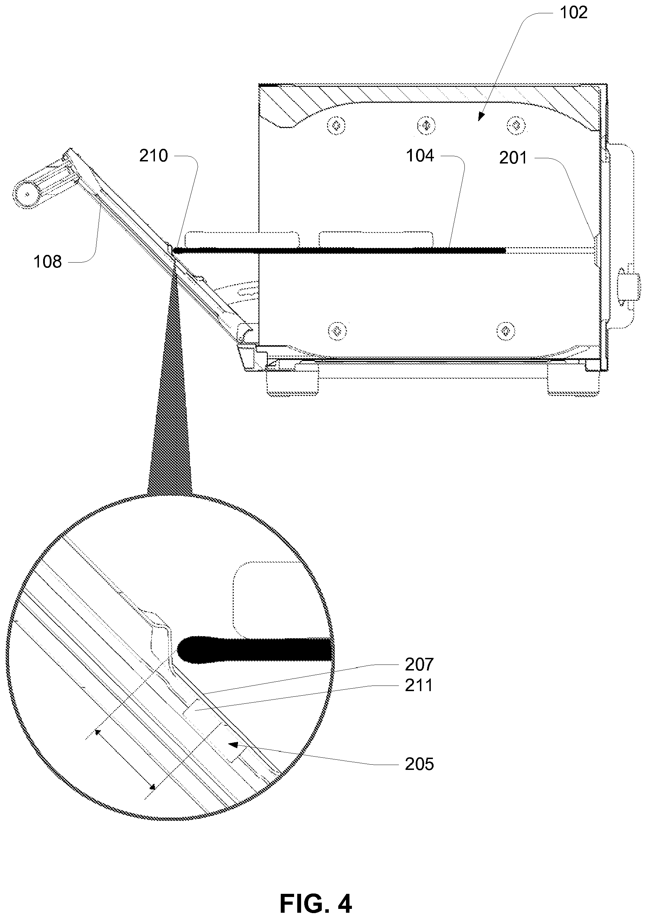

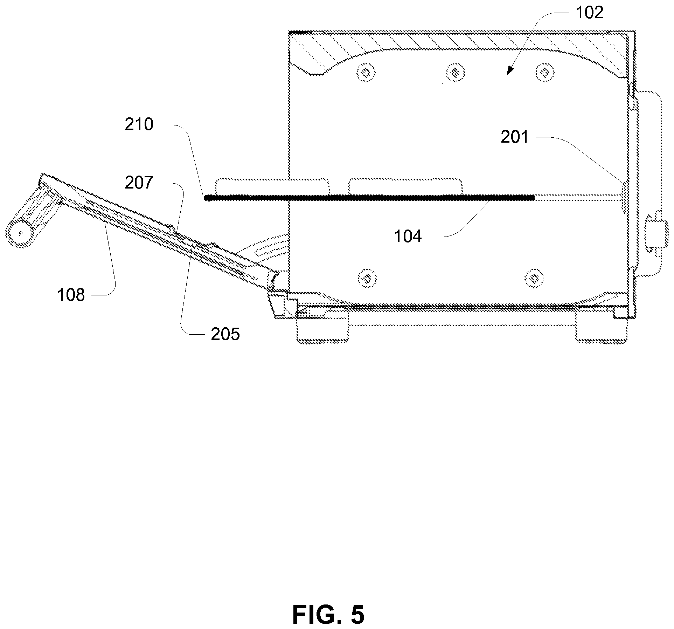

Referring to Figures 3-5, as the door 108 is opened, it pivots downwardly. Under the influence of the magnet 205, the rack 104 is displaced forward as the magnet is displaced, and is therefore pulled partially, but not fully out of the cavity 102. The displacement of the rack 104 is horizontal, whereas the displacement of the magnet is an arc of a circle. The front edge 210 of the rack 104 moves forward and at the same time advances along the recess floor 207, until the front edge 210 reaches beyond a top portion 211 of the magnet 205. The front edge 210 eventually comes away and ceases to be under the influence of the magnet 205 and is not pulled out any further. In this example, the strength of the magnet 205 and the recess 204 are configured so as to cause the tray to be pulled out by approximately 72mm.

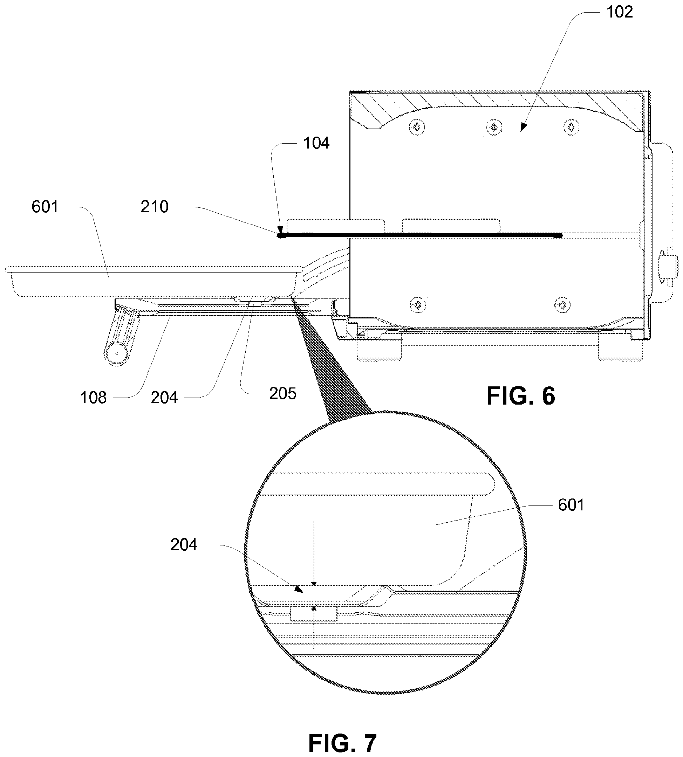

Referring to Figures 6 and 7, the door 108 is horizontal when it is completely open. After a user removes a dish, a plate, or a food item from the rack 208, he or she may sometimes place it on the inner surface of the open door 108. In some cases the dish, plate, or tray 601 is paramagnetic, and it is desirable that the tray 601 is not held to the door 108 by the magnets 205. Because the magnet 205 is located in the recess 204, the bottom of the tray 601 does not contact the magnet 205. It is also desirable that the magnet 205 in the recess 204 is weak enough so that its magnetic attraction does not interfere with the handling of a tray 601 placed on the door 108.

It will be appreciated that the extraction of the tray as performed by the magnetic field of a door mounted magnet will also work if the magnet is instead mounted onto the tray and attracted equally to a paramagnetic portion of the door. If this embodiment were executed, the door would not require a recess because a metal pan placed onto the open door would not be attracted to the door. Importantly, the magnetic attraction between the rack and the door (regardless of where the magnet is) and the geometry of the door and rack arrangement dictate that the rack be pulled or extracted from the cavity, but only partially, even when the door is fully open. That arrangement and geometry also causes the useful decoupling of the rack and door when the rack has been extracted a useful amount, without disconnecting the rack from its guides within the cavity.

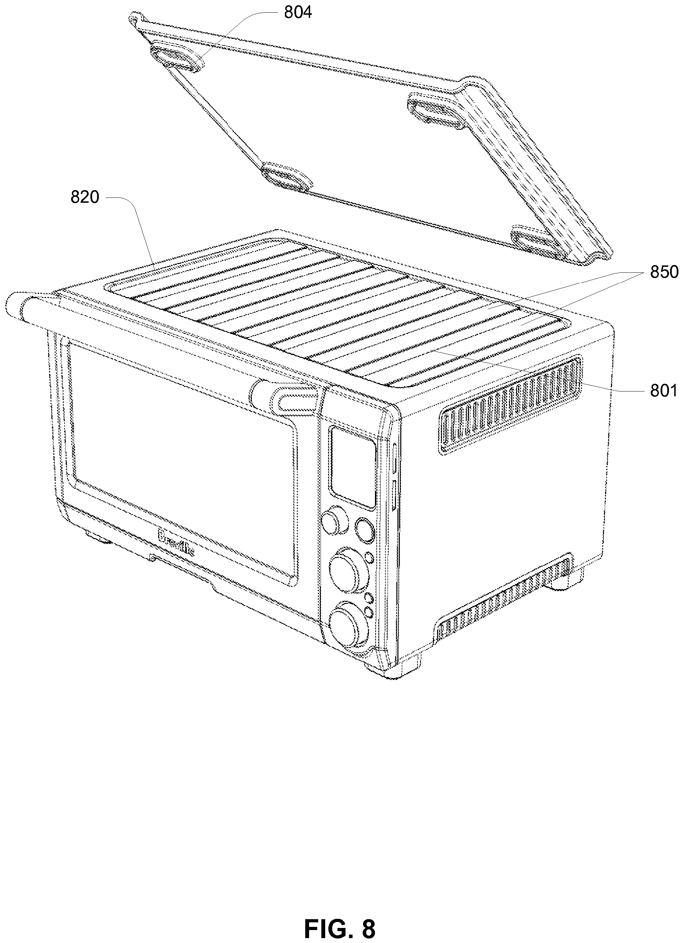

Referring to Figure 8, the toaster oven may provide a specially configured surface for an interlocking retaining a tray or cutting board or work surface for the user. A top surface 801 of the toaster oven may be embossed, indented, or otherwise patterned. In the example the pattern consists of an array of parallel ribs 850 within a rectangular recess. A tray, for example a wood, bamboo or moulded melamine tray 802, may carry feet or stubs that engage or interlock with the pattern of the top surface. In one example, the melamine tray 802 has location feet 804 that receive the raised portions 850. The cooperation between the location feet 804 and the raised ribs or portions 850 help locate the tray 802 on the top surface 801. In particular the location is such that the front edge of the work surface, tray or board is recessed back (e.g. 20mm) from the front edge of the upper surface 801 of the oven. This keeps the work surface, tray or board away from heat and moisture that rise from the oven cavity when the door is opened. The interlocking of the feet and raised portions also provide the user with visual and tactile clues that assist the user in locating the work surface, tray or board in a stable orientation away from the rounded lateral edges of the top surface 801. The interlocking not only correctly positions the tray or cutting board, but it also helps the tray or board resisting or leaving the correct orientation when the oven is bumped or the door is closed etc.

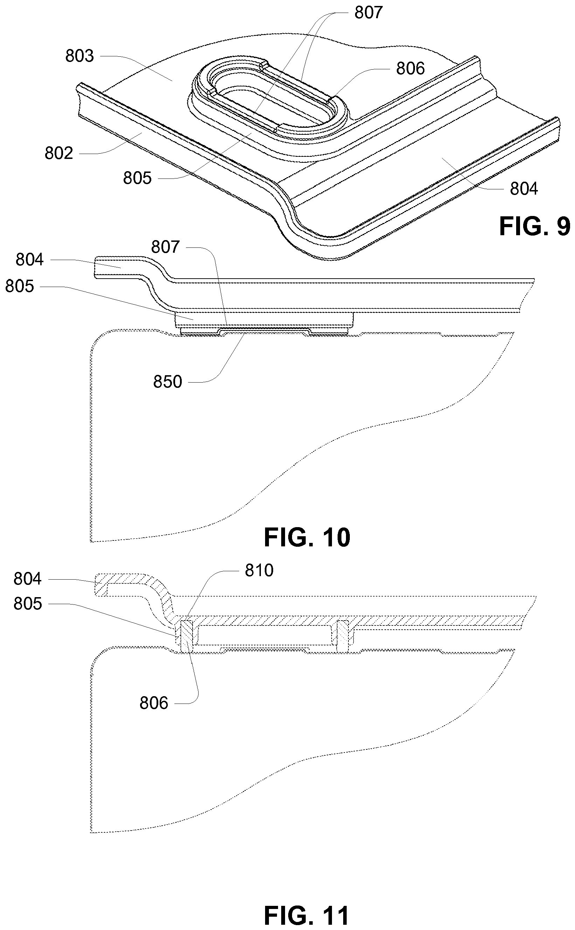

As shown in Figure 9, a melamine tray 802 comprises a recessed deck 803 with opposing, parallel handles 804 that are elevated above the deck 803. The four corners of the deck area 803 are characterised by integral oval shaped surrounds 805 that are adapted to receive moulded polymeric feet 806. The lowest edge of the feet 806 is recessed in two positions 807 so as to accommodate the raised portions 850 as shown in Figure 11, the surrounds 805 may be formed with a central groove 810 for receiving the oval shaped polymeric insert 806. The insert may be moulded from a silicone rubber or other compound that is heat resistant. The underside of the work surface, tray or board may be in contact with or elevated above the upper surface of the oven. The work surface, tray or board provide a useful stand-alone object, a recuperation of lost counter space and an area of reduced heat compared to the upper surface of the oven.

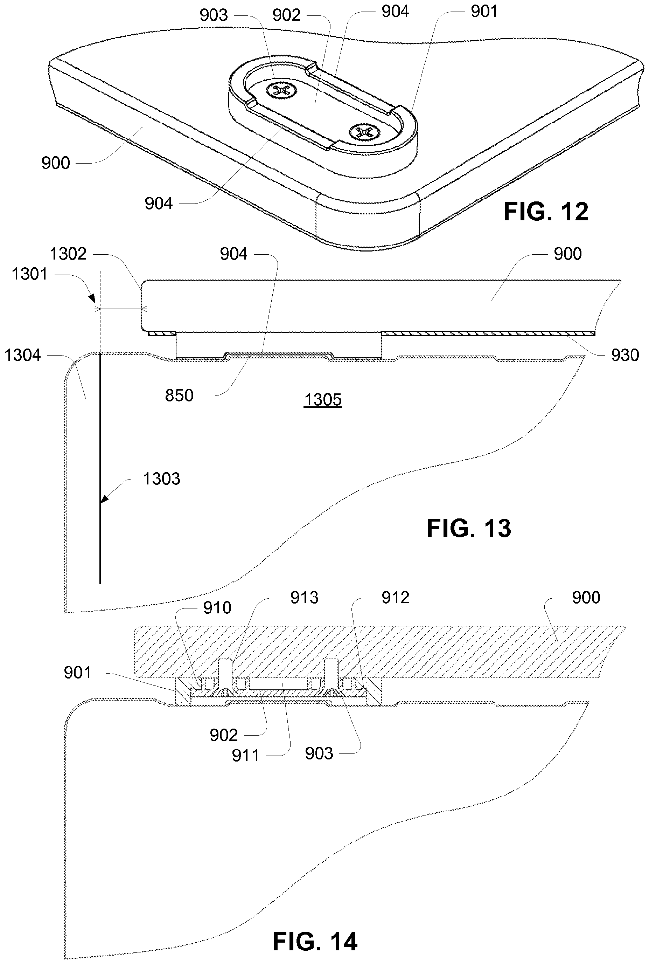

As shown in Figure 12, a cutting board such as a bamboo composite cutting board 900 may be provided in place of the melamine tray disclosed with reference to Figures 8-11. In this example, the four corners of the cutting board 900 are associated with polymeric feet 901 that are retained by central rigid plates 902 that are fastened to the board 900 by threaded fasteners 903. The feet 901 feature grooves 904 that cooperate with the raised portions 850 as shown in Figures 13 and 14. Figure 13 also illustrates that the underside of the work surface, tray or board can have affixed to it, a heat reflective surface member 930 such as a stainless steel sheet. The sheet 930 may be sandwiched between the feet and the underside of the work surface, tray or board. In the absence of a reflective member, the underside (particularly of a melamine work surface, tray or board) may be a lighter colour to minimise heat absorption. Figure 13 also illustrates a preferred set-back of the front edge 1302 of the cutting board 900 with respect to the gap 1303 between the front opening oven door 1304 and the body 1305 of the oven. In all embodiments it is a preferred feature that the set back, when the feet 901 are seated on the ribs or features, be about 2.5cm or 1 inch. This minimises the impact of heat rising from the cavity of the oven when the door is open.

As shown in Figure 14, the feet 901 have an internal shoulder 910 and a central opening 911. The plate 902 has a peripheral ridge 912 that engages the shoulder 910 when the fasteners 903 are driven into their respective openings 913 in the cutting board 900.

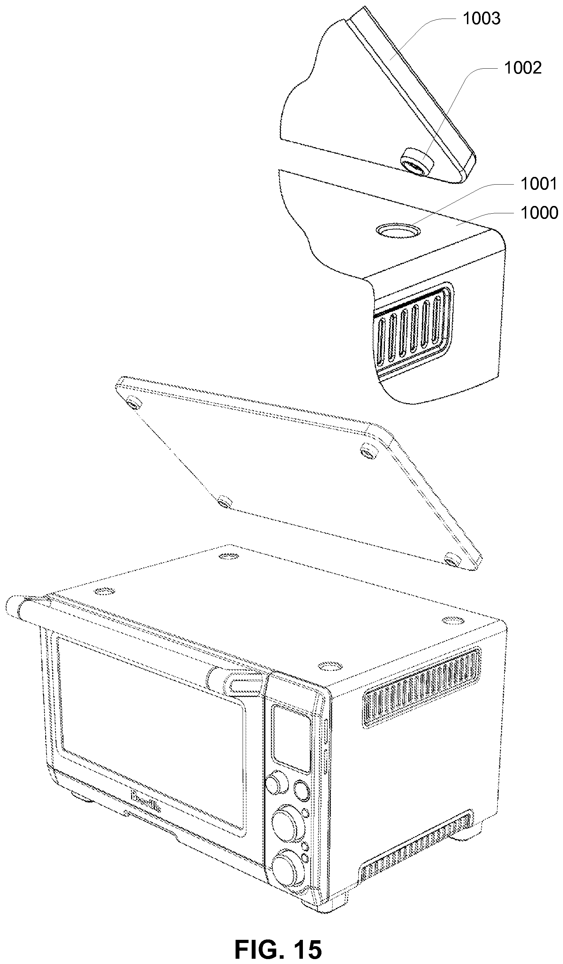

As shown in Figure 15, the stainless steel sheet metal top surface of the oven 1000 includes indentations 1001, such as circular indentations, that are adapted to receive round feet 1002 formed on the bottom of a tray or cutting board 1003. In preferred embodiments, the tray or cutting board 1003 includes four such round feet 1002 and the top of the oven has four corresponding indentations 1001.

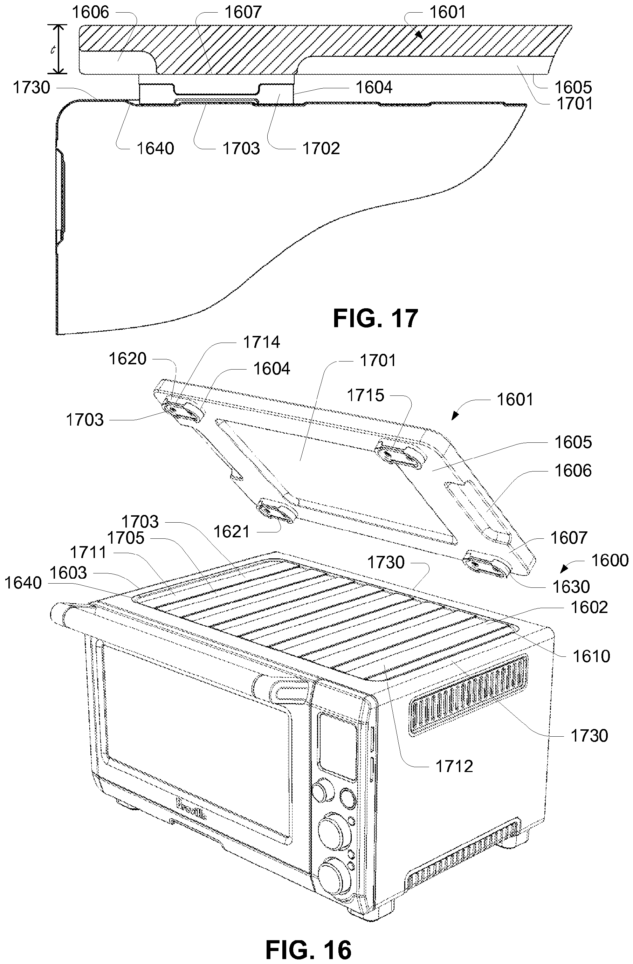

As shown in Figure 16, an oven 1600 has a cooperating tray 1601 or chopping board 1601 fabricated from a bamboo and resin composite material. The upper surface 1603, having a pattern of ribs within a recessed area 1610 of the top surface can be used as a stainless steel storage area of plate warmer that rigidised by the transverse ribs 1711. It can also serve as a locating surface for the interlocking tray 1601. The composite is adapted to remain stable at elevated temperatures and the bamboo naturally contains substances that make the cutting board or tray resistant to microbial attack. The tray 1601 is adapted to interlock with features (in this example fore and aft ribs 1602) formed on an upper pressed metal surface 1603 of the oven 1600. It is particularly well adapted to be used as a serving tray because the bamboo composite is well adapted to receive hot cooking vessels when they come out of the oven 1600. Hot vessels can then be bought to the table on top of the tray 1601. The special construction of the tray's underside and feet 1604 contribute to this kind of utility and versatility in several ways.

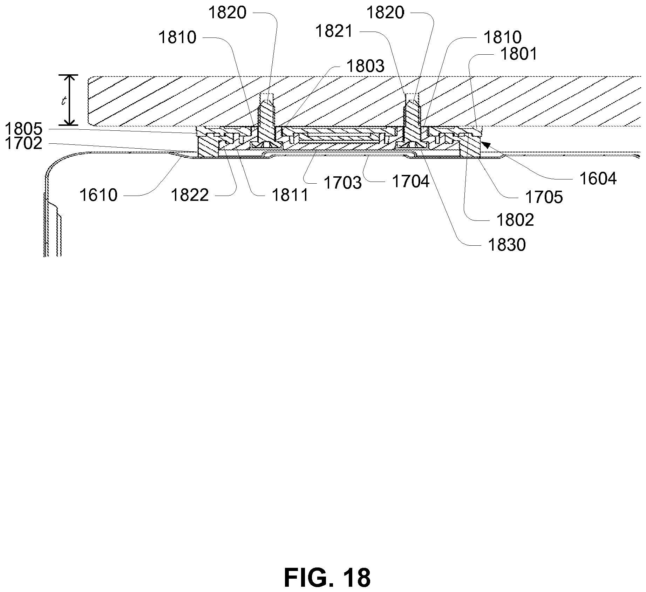

As shown in Figure 17 and 18, the silicone foot 1604 and tray 1601 have features that combine to make the tray 1601 more useful in the hot conditions associated with the pressed metal top surface 1603 of an oven such as a toaster oven.

As suggested by Figure 17, the maximum thickness of the resin impregnated bamboo composite "t" is about 19mm. The tray has a central recess or undercut 1701 that assists in ventilation and heat dissipation. The depth of the central undercut or recess is about 7mm. A handle recess is provided at and along the lower edge of each end of the tray. The handle recess also aids in heat dissipation. The depth of the handle recess 1606 is about 9mm. But for the handle recesses 1606, a full thickness border area 1607 surrounds the central recess 1701. In this example, four feet are fastened onto the underside of the tray 1601 on this border area 1607.

As shown in Figures 17 and 18, each foot 1604 has a lowermost, oven contacting portion 1702 that is fabricated from heat resistant silicone. The descending oval shaped rim 1630 of the contact portion 1702 is adapted to interlock with features formed into the upper surface 1603 of the oven 1600. In this example, each of the four feet has a groove 1714, 1715 in the rim 1630 that fits over a rib 1704 formed into the stainless upper surface 1603. In this example, the pressed stainless steel upper surface 1603 further comprises a primary recess 1610 within which are located the parallel ribs 1703, separated by parallel sunken grooves 1705. The tops of the ribs are at or just below the surrounding top surface 1730. The spacing between the ribs 1703 that are farthest apart 1711, 1712 is the same as the spacing between the left and right pairs of foot grooves 1714, 1715. The length of the primary recess 1610 (extending fore and aft) corresponds to the distance between a forward vertical surface 1620 of the two forward feet 1604 and an aft vertical surface 1621 of the rear feet. Thus, not only do the grooves in the foot interlock with a particular pair of ribs 1711, 1712. The outside margins of the feet also assist in centering and stabilising the tray within the corners of the primary recess 1610.

As previously mentioned, the oven contacting or contact portions 1702 of each foot 1604 are fabricated from a heat resistant silicone. The silicone not only remains stable across a wide range of temperatures, but also dissipates heat rapidly. This makes transfer of the tray from the oven to heat sensitive surface such as a varnished wood table top possible.

The silicone contact portions 1702 may be affixed directly to the underside 1607 of the tray. However, the example depicted in Figure 18, a nylon intermediate member 1801 is used both to receive moulded interlocking ribs 1802 formed on an upper surface of the silicone contact portion 1702 and also to provide additional height between the upper surface of the oven and the underside of the tray thus reducing the consumption of the more expensive silicone polymer. The intermediate portion 1801 is a heat stable stiff polymer such as nylon and has through openings 1803 for receiving a pair of bosses 1810 that are associated with a nylon fastener plate 1811. The peripheral vertical edge surface 1805 of the intermediate member 1801 provides a convenient location for printing, such as warnings or recommendations.

The fastener plate 1811 provides a pair of through openings for receiving stainless steel threaded fasteners 1820 that are received by blind openings 1821 formed into the underside of the tray 1601. The fastener plate 1811 has a peripheral rib 1822 that interlocks with a peripheral groove formed into the contact portion 1702. Thus, tightening the fasteners 1820 effectively clamps the silicone contact portion 1702 between the fastening plate 1811 and the underside of the intermediate portion 1805 or (in some embodiments) the underside of the tray 1601. In this embodiment, the underside of the fastening plate 1811 has countersunk openings 1830 for receiving the heads of the fasteners 1820. In preferred embodiments, the height of the foot, from the underside of the tray to the bottom of the contact portion is about 12mm.

While the present invention has been disclosed with reference to particular details of construction, these should be understood as having been provided by way of example and not as limitations to the invention.

## Claims

1. An oven (100) with an internal heating cavity (102) and a front opening door (108) that is horizontally hinged to a lower front portion of the oven body (101), the cavity having opposing support structures (103) for supporting one or more metal racks (104), wherein the oven includes:
a magnet (205) having a magnetic field that is used to pull a rack forward and partially out of the oven, but not fully out of the oven, even when the door is fully open
**characterised in that**
the door (108) includes at least one recess (204) defined on its inner surface, the recess (204) being configured to receive a forward edge (210) of a rack supported within the cavity (102) when the door is closed; and
the magnet (205) is located in a cavity behind the at least one recess.

2. The oven according to claim 1, wherein:
the magnet is located such that the rack received by the recess (204) in the cavity is under the influence of the magnet (205) when the door is closed.

3. The oven according to any one of the preceding claims, wherein:
the rack received by the recess is advanced forward relative to racks located at other positions in the cavity by a rear bumper (201) located within the cavity.

4. The oven according to claim 3, wherein:
a clearance (208) is left between a rear edge of the rack and the rear bumper (201).

5. The oven according to any one of the preceding claims, wherein:
the magnet (205) is weak enough so that a magnetic attraction does not interfere with the handling of a metal tray placed on the door when it is open.

6. The oven according to any one of the preceding claims, wherein:
a displacement of the rack is horizontal, whereas a displacement of the magnet is an arc of a circle; and
a front edge (210) of the rack moves forward and at the same time advances along a floor (207) of the recess (204) in the door, until the front edge (210) reaches beyond a top portion of the magnet.

7. The oven according to any one of the preceding claims, wherein:
the cavity (102) has interior walls and grooves that are formed into the interior walls, the grooves defining three rack positions, a middle position (106) being a "rack pull-out" position where an opening of the oven door automatically causes the rack to be pulled out.

8. The oven according to any one of the preceding claims, wherein:
a correct rack position for a particular food is indicated by a label (115) affixed to or printed on the door, a location of a label corresponding to a rack position.

9. The oven according to any one of the preceding claims, wherein:
the door comprises a frame (109) that surrounds a glass window (110).

10. The oven according to any one of the preceding claims wherein:
the oven is adapted to operate as a bench-top oven and includes a metal upper surface (801);
the oven further including a cutting board (900);
the upper surface having features that cooperate with the cutting board;
the cutting board having heat resistant feet (804, 901, 1604) that interlock with the features.

11. The oven according to claim 10, wherein:
the upper surface has a pattern of ribs (850) within a recessed area (1610) that serve as a locating feature for the cutting board; and
the ribs (850) have tops, and the tops of the ribs are at or just below a surrounding top surface; and
the upper surface further comprises a primary recess within which are located a plurality of parallel ribs separated by parallel sunken grooves.

12. The oven according to any one of claims 10 to 11, wherein:
the board has two ends and a handle recess (1606) is provided along a lower edge of each end.

13. The oven according to any one of claims 10 to 12, wherein:
each foot (1604) has a lowermost, oven contacting portion that is fabricated from heat resistant silicone adapted to interlock with the features (1602) formed into the upper surface (1603).

14. The oven according to any one of claims 10 to 13, wherein:
each foot (1604) has a groove (1714, 1715) in a rim (1630) that fits over a rib (1704) formed into the upper surface (1603); and
an outside margin of each foot assists in centering and stabilising the cutting board within the corners of a recess (1610).

15. The oven according to any one of claims 10 to 14, wherein:
a polymer intermediate member (1801) is used both to receive a silicone contact portion (1702) of each foot (1604) and to provide additional height between the upper surface and an underside of the board.

## Patentansprüche

1. Ofen (100) mit einem internen Heizungshohlraum (102) und einer von vorne zu öffnenden Tür (108), die horizontal schwenkbar an einem unteren, vorderen Teil des Ofenkörpers (101) befestigt ist, der Hohlraum aufweisend gegenüberliegende Tragstrukturen (103) zum Tragen von einem oder mehreren Metallgitterrosten (104), wobei der Ofen enthält:
einen Magneten (205), aufweisend ein magnetisches Feld, das verwendet wird, um einen Gitterrost nach vorne und teilweise aus dem Ofen herauszuziehen, jedoch nicht vollständig aus dem Ofen heraus, selbst wenn die Tür vollständig geöffnet ist,
**dadurch gekennzeichnet, dass**:
die Tür (108) mindestens eine Aussparung (204) enthält, die auf ihrer Innenseite definiert ist, wobei die Aussparung (204) konfiguriert ist, um eine Vorderkante (210) eines Gitterrosts aufzunehmen, der im Inneren des Hohlraums (102) getragen wird, wenn die Tür geschlossen ist; und
der Magnet (205) in einem Hohlraum hinter der mindestens einen Aussparung angeordnet ist.

2. Ofen gemäß Anspruch 1, wobei:
der Magnet so angeordnet ist, dass der Gitterrost, der durch die Aussparung (204) in dem Hohlraum aufgenommen ist, unter dem Einfluss des Magneten (205) steht, wenn die Tür geschlossen ist.

3. Ofen gemäß einem der vorherigen Ansprüche, wobei:
der Gitterrost, der durch die Aussparung aufgenommen ist, im Verhältnis zu Gitterrosten, die an anderen Positionen in dem Hohlraum angeordnet sind, durch einen hinteren Anschlag (201), der sich im Inneren des Hohlraums befindet, nach vorne bewegt wird.

4. Ofen gemäß Anspruch 3, wobei:
ein Abstand (208) zwischen einer hinteren Kante des Gitterrosts und dem hinteren Anschlag (201) verbleibt.

5. Ofen gemäß einem der vorherigen Ansprüche, wobei:
der Magnet (205) schwach genug ist, sodass eine magnetische Anziehungskraft nicht mit der Handhabung eines Metalltabletts in Konflikt gerät, das auf der Tür platziert wird, wenn diese geöffnet ist.

6. Ofen gemäß einem der vorherigen Ansprüche, wobei:
eine Verschiebung des Gitterrosts waagerecht ist, wogegen eine Verschiebung des Magneten kreisbogenförmig ist; und
eine vordere Kante (210) des Gitterrosts sich nach vorne bewegt und gleichzeitig entlang einem Boden (207) der Aussparung (204) in der Tür bewegt wird, bis die vordere Kante (210) über einen oberen Abschnitt des Magneten hinaus ragt.

7. Ofen gemäß einem der vorherigen Ansprüche, wobei:
der Hohlraum (102) Innenwände und Nuten aufweist, die in den Innenwänden ausgebildet sind, wobei die Nuten drei Gitterrostpositionen definieren, wobei eine mittlere Position (106) eine "Gitterrost-Herauszieh"-Position ist, in der ein Öffnen der Ofentür automatisch dazu führt, dass der Gitterrost herausgezogen wird.

8. Ofen gemäß einem der vorherigen Ansprüche, wobei:
eine korrekte Gitterrostposition für eine bestimmte Speise durch ein Etikett (115) angezeigt wird, welches an der Tür befestigt oder auf diese aufgedruckt ist, wobei eine Stelle eines Etiketts einer Gitterrostposition entspricht.

9. Ofen gemäß einem der vorherigen Ansprüche, wobei:
die Tür einen Rahmen (109) umfasst, der ein Glasfenster (110) umgibt.

10. Ofen gemäß einem der vorherigen Ansprüche, wobei:
der Ofen für den Betrieb als Tischgerät ausgelegt ist und eine metallische obere Fläche (801) enthält;
der Ofen des Weiteren ein Schneidbrett (900) enthält;
die obere Fläche Merkmale aufweist, die mit dem Schneidbrett zusammenwirken;
das Schneidbrett hitzebeständige Füße (804, 901, 1604) aufweist, die formschlüssig mit den Merkmalen sind.

11. Ofen gemäß Anspruch 10, wobei:
die obere Fläche ein Muster von Rippen (850) innerhalb eines vertieften Bereichs (1610) aufweist, die als ein Positionierungsmerkmal für das Schneidbrett dienen; und
die Rippen (850) Oberseiten aufweisen und sich die Oberseiten der Rippen auf der Höhe einer umgebenden oberen Fläche befinden oder knapp unterhalb von dieser; und
die obere Fläche des Weiteren eine primäre Aussparung umfasst, in der sich eine Mehrzahl von parallelen Rippen befinden, die durch parallele eingelassene Nuten getrennt sind.

12. Ofen gemäß einem der Ansprüche 10 bis 11, wobei:
das Brett zwei Enden aufweist und eine Griffaussparung (1606) entlang einer unteren Kante von jedem Ende vorgesehen ist.

13. Ofen gemäß einem der Ansprüche 10 bis 12, wobei:
jeder Fuß (1604) einen untersten, den Ofen kontaktierenden Abschnitt aufweist, der aus hitzebeständigem Silikon gefertigt und dazu ausgelegt ist, formschlüssig mit den Merkmalen (1602) zu sein, die in der oberen Fläche (1603) ausgebildet sind.

14. Ofen gemäß einem der Ansprüche 10 bis 13, wobei:
jeder Fuß (1604) eine Nut (1714, 1715) in einem Rand (1630) aufweist, die über eine Rippe (1704) passt, die in der oberen Fläche (1603) ausgebildet ist; und
ein Außensaum von jedem Fuß die Zentrierung und Stabilisierung des Schneidbretts innerhalb der Ecken einer Aussparung (1610) erleichtert.

15. Ofen gemäß einem der Ansprüche 10 bis 14, wobei:
ein Polymer-Zwischenelement (1801) verwendet wird, sowohl um einen Silikon-Kontaktabschnitt (1702) von jedem Fuß (1604) aufzunehmen als auch um zusätzliche Höhe zwischen der oberen Fläche und eine Unterseite des Bretts bereitzustellen.

## Revendications

1. Un four (100) avec une cavité de chauffage interne (102) et une porte d'ouverture de devant (108) qui est articulée horizontalement sur une partie de devant inférieure du corps de four (101), la cavité ayant des structures de support opposées (103) pour supporter une ou plusieurs grilles métalliques (104), où le four inclut :
un aimant (205) ayant un champ magnétique qui est utilisé pour tirer une grille vers l'avant et partiellement hors du four, mais pas complètement hors du four, même lorsque la porte est complètement ouverte
**caractérisé en ce que**
la porte (108) inclut au moins un évidement (204) défini sur sa surface interne, l'évidement (204) étant configuré pour recevoir un bord avant (210) d'une grille supportée à l'intérieur de la cavité (102) lorsque la porte est fermée ; et
l'aimant (205) est situé dans une cavité derrière l'au moins un évidement.

2. Le four selon la revendication 1, où :
l'aimant est situé de telle sorte que la grille reçue par l'évidement (204) dans la cavité soit sous l'influence de l'aimant (205) lorsque la porte est fermée.

3. Le four selon l'une quelconque des revendications précédentes, où :
la grille reçue par l'évidement est avancée vers l'avant relativement aux grilles situées à d'autres positions dans la cavité par un butoir arrière (201) situé à l'intérieur de la cavité.

4. Le four selon la revendication 3, où :
un dégagement (208) est laissé entre un bord arrière de la grille et le butoir arrière (201).

5. Le four selon l'une quelconque des revendications précédentes, où :
l'aimant (205) est suffisamment faible pour qu'une attraction magnétique n'interfère pas avec la manipulation d'un plateau métallique placé sur la porte lorsqu'elle est ouverte.

6. Le four selon l'une quelconque des revendications précédentes, où :
un déplacement de la grille est horizontal, tandis qu'un déplacement de l'aimant est en arc de cercle ; et
un bord de devant (210) de la grille se déplace vers l'avant et en même temps avance le long d'un plancher (207) de l'évidement (204) dans la porte, jusqu'à ce que le bord de devant (210) arrive au-delà d'une partie supérieure de l'aimant.

7. Le four selon l'une quelconque des revendications précédentes, où :
la cavité (102) a des parois intérieures et des rainures qui sont formées dans les parois intérieures, les rainures définissant trois positions de grille, une position médiane (106) étant une position de « tirage dehors de grille » où une ouverture de la porte du four amène automatiquement la grille à être tirée dehors.

8. Le four selon l'une quelconque des revendications précédentes, où :
une position de grille correcte pour un aliment particulier est indiquée par une marque (115) fixée sur ou imprimée sur la porte, un emplacement d'une marque correspondant à une position de grille.

9. Le four selon l'une quelconque des revendications précédentes, où :
la porte comprend un cadre (109) qui entoure un hublot (110).

10. Le four selon l'une quelconque des revendications précédentes où :
le four est conçu pour fonctionner comme un four de table et inclut une surface supérieure métallique (801) ;
le four incluant en outre une planche à découper (900) ;
la surface supérieure ayant des éléments qui coopèrent avec la planche à découper ;
la planche à découper ayant des pieds résistants à la chaleur (804, 901, 1604) qui se verrouillent avec les éléments.

11. Le four selon la revendication 10, où :
la surface supérieure a un motif de nervures (850) à l'intérieur d'une zone évidée (1610) qui sert d'élément de repérage pour la planche à découper ; et
les nervures (850) ont des dessus, et les dessus des nervures sont au niveau ou juste au-dessous d'une surface de dessus environnante ; et
la surface supérieure comprend en outre un évidement primaire à l'intérieur duquel sont situées plusieurs nervures parallèles séparées par des rainures parallèles enfoncées.

12. Le four selon l'une quelconque des revendications 10 à 11, où :
la planche a deux extrémités et un évidement formant poignée (1606) est fourni le long d'un bord inférieur de chaque extrémité.

13. Le four selon l'une quelconque des revendications 10 à 12, où :
chaque pied (1604) a une partie la plus basse en contact avec le four qui est fabriquée à partir de silicone résistant à la chaleur conçue pour se verrouiller avec les éléments (1602) formés dans la surface supérieure (1603).

14. Le four selon l'une quelconque des revendications 10 à 13, où :
chaque pied (1604) a une rainure (1714, 1715) dans un rebord (1630) qui s'adapte sur une nervure (1704) formée dans la surface supérieure (1603) ; et
une bordure extérieure de chaque pied facilite le centrage et la stabilisation de la planche de découpe à l'intérieur des coins d'un évidement (1610).

15. Le four selon l'une quelconque des revendications 10 à 14, où :
un organe intermédiaire polymère (1801) est utilisé à la fois pour recevoir une partie de contact en silicone (1702) de chaque pied (1604) et pour fournir une hauteur supplémentaire entre la surface supérieure et une face inférieure de la planche.
